(19) Europäisches Patentamt / European Patent Office / Office européen des brevets

(11) **EP 2 450 252 A1**

(12) **DEMANDE DE BREVET EUROPEEN**

(43) Date de publication:
**09.05.2012   Bulletin 2012/19**

(21) Numéro de dépôt: **11306166.7**

(22) Date de dépôt: **16.09.2011**

(51) Int Cl.:
*B60W 30/18* (2012.01)     *B60W 10/06* (2006.01)
*B60W 10/10* (2012.01)     *B60W 10/02* (2006.01)
*F16H 61/684* (2006.01)     *F16H 61/06* (2006.01)
*F16H 63/50* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **04.11.2010  FR 1004329**

(71) Demandeur: **Renault S.A.S.**
**92100 Boulogne-Billancourt (FR)**

(72) Inventeurs:
• **Vandekerkhove, Remi**
  **75012 PARIS (FR)**
• **Robert, Kevin**
  **91220 BRETIGNY SUR ORGE (FR)**

(54) **Procédé de pilotage d'une boîte de vitesses automatique**

(57)    L'invention concerne un procédé de pilotage d'un groupe motopropulseur de véhicule automobile (1) dans lequel, lors d'un changement de rapport de vitesses d'une boîte de vitesses automatique (30), il est prévu de synchroniser le régime moteur en :
- déterminant un régime moteur initial et un régime moteur final,
- déterminant une dérivée du régime moteur final,
- calculant une consigne d'accélération angulaire du bloc-moteur pour que le régime moteur passe du régime initial au régime final,
- pilotant le bloc-moteur selon une consigne de couple moteur déduite de ladite consigne d'accélération angulaire, et en
- pilotant un moyen d'embrayage (33 - 36) de la boîte de vitesses selon une consigne de couple transmissible.
    Selon l'invention, la consigne d'accélération angulaire est calculée de sorte qu'elle atteigne ladite dérivée du régime moteur final lorsque le régime moteur atteint le régime final et il est prévu de calculer ladite consigne de couple transmissible en fonction de l'écart entre la consigne de couple moteur et une valeur de couple moteur réalisé.

Fig.1

EP 2 450 252 A1

**Description**

La présente invention concerne de manière générale le pilotage d'un groupe motopropulseur comportant une boîte de vitesses automatique à passage de rapports sans rupture de couple.

L'invention concerne plus particulièrement un procédé de pilotage d'un groupe motopropulseur d'un véhicule automobile qui comporte un bloc-moteur et une boîte de vitesses automatique munie d'au moins un moyen d'embrayage, dans lequel, lors d'un changement de rapport de vitesses de la boîte de vitesses automatique depuis un rapport initial vers un rapport final, il est prévu des étapes de synchronisation du régime moteur consistant à :

   a) déterminer un régime moteur initial lorsque le rapport initial est engagé en début de synchronisation et un régime moteur final lorsque le rapport final sera engagé en fin de synchronisation,
   b) déterminer une accélération angulaire finale dudit bloc-moteur lorsque le rapport final sera engagé en fin de synchronisation,
   c) calculer, en fonction de ladite accélération angulaire finale, une consigne d'accélération angulaire dudit bloc-moteur pour que le régime moteur passe continûment du régime initial au régime final,
   d) piloter le bloc-moteur selon une consigne de couple moteur déduite de ladite consigne d'accélération angulaire, et
   e) piloter ledit moyen d'embrayage selon une consigne de couple transmissible.

Elle concerne également les groupes motopropulseurs équipés d'un bloc-moteur et d'une boîte de vitesses automatique, notamment à double embrayage ou à coupleurs coniques.

ARRIERE-PLAN TECHNOLOGIQUE

Dans une boîte de vitesses à double embrayage, l'un des embrayages permet de débrayer les rapports pairs de la boîte, tandis que l'autre permet de débrayer les rapports impairs de la boîte. Pour passer d'un rapport initial à un rapport final, il est alors prévu d'ouvrir progressivement l'un des embrayage et de fermer l'autre embrayage.

Dans une boîte de vitesses à coupleurs coniques, chaque pignon fou est agencé pour être solidarisé en rotation avec l'arbre qui le porte au moyen d'un coupleur conique compact qui joue ainsi le rôle d'un embrayage local. Pour passer d'un rapport initial à un rapport final, il est alors prévu d'ouvrir progressivement l'un des coupleurs coniques et de fermer l'autre coupleur conique.

Ces deux types d'architectures de boîtes de vitesses permettent ainsi de changer de rapport de vitesses sans rupture de couple, c'est-à-dire de telle sorte que les roues motrices du véhicule ne se trouvent à aucun moment en roues libres.

L'ouverture de l'un des moyens d'embrayage et la fermeture de l'autre moyen d'embrayage doivent pour cela êtres pilotées simultanément et de manière symétrique. On parle alors de bascule de couples.

Lors de ce changement de rapport, le régime du moteur doit par ailleurs être synchronisé, c'est-à-dire amené de manière aussi continue et douce que possible vers sa nouvelle valeur correspondant au rapport final.

Cette phase de synchronisation est particulièrement sensible puisque, lorsqu'elle est réalisée de manière imparfaite, elle génère des à-coups préjudiciables aux performances du moteur et au confort de conduite du véhicule.

Pour réduire ces à-coups, on connaît notamment du document FR 1050638 [non encore publié à la date du dépôt de la présente demande de brevet] un procédé de pilotage d'un groupe motopropulseur dans lequel le bloque est piloté selon une consigne de couple qui est calculée en fonction du temps de passage moyen d'un rapport de vitesses à l'autre.

Plus précisément, dans ce document, la consigne de couple est calculée de telle manière que le régime moteur s'approche progressivement d'un régime moteur souhaité, de manière qu'à l'instant où le régime moteur atteint le régime souhaité, le couple délivré par le moteur soit égal au couple souhaité. Le régime moteur souhaité est alors calculé pour être distinct du régime moteur final initialement calculé en fonction du coefficient de démultiplication du rapport final, de manière à tenir compte de ce temps de passage moyen.

L'inconvénient de ce procédé est qu'il ne fonctionne correctement qu'à la condition expresse que le temps de passage du rapport initial au rapport final soit égal au temps de passage moyen prédéterminé. Or, cette condition n'est généralement pas remplie puisque le temps de passage varie en fonction du régime moteur et des conditions environnementales (notamment l'altitude) dans lesquelles le véhicule évolue. Il s'en suit alors des à-coups non désirés lors du passage des rapports de vitesses.

OBJET DE L'INVENTION

Afin de remédier à l'inconvénient précité de l'état de la technique, la présente invention propose un nouveau procédé de pilotage du groupe motopropulseur, qui permette de compenser les différences de couples entre le couple

EP 2 450 252 A1

souhaité et le couple effectivement transmis aux roues du véhicule.

Plus particulièrement, on propose selon l'invention un procédé de pilotage tel que défini dans l'introduction dans lequel, à l'étape c), la consigne d'accélération angulaire est calculée de sorte qu'elle atteigne ladite accélération angulaire finale lorsque le régime moteur atteint le régime final, et dans lequel, à l'étape e), il est prévu de mesurer une valeur de couple moteur réalisé et de calculer ladite consigne de couple transmissible en fonction de l'écart entre la consigne de couple moteur et la valeur de couple moteur réalisé.

Selon l'invention, la consigne de couple moteur est donc calculée de telle manière que le régime moteur s'approche progressivement du régime moteur final, ce régime moteur final étant initialement calculé en fonction du coefficient de démultiplication du rapport final.

Pour compenser les à-coups que pourraient générer les différences de couples entre le couple souhaité et le couple effectivement transmis aux roues du véhicule, il est alors prévu, grâce à l'invention, de filtrer le couple délivré par le moteur à l'aide de la consigne de couple des moyens de débrayage.

De cette manière, la correction des consignes de couples ne dépend plus du temps de passage des rapports de vitesses.

D'autres caractéristiques avantageuses et non limitatives du procédé de pilotage conforme à l'invention sont les suivantes :

- à l'étape d), la consigne de couple moteur est calculée en fonction d'une consigne de couple primaire qui est égale à un couple souhaité issu d'une cartographie en fonction d'une pression ou d'une position de pédale d'accélération du véhicule automobile, auquel est soustrait un couple d'inertie du bloc-moteur ;
- la consigne de couple moteur est calculée pour être égale à la somme de la consigne de couple primaire et du produit de l'inertie par la consigne d'accélération angulaire du bloc-moteur ;
- à l'étape e), la consigne de couple transmissible est calculée pour être égale à la somme de la consigne de couple primaire et dudit écart ;
- à l'étape c), la consigne d'accélération angulaire est calculée pour être égale à une constante tant que l'écart entre le régime moteur et le régime moteur final est supérieur à une constante prédéterminée ;
- à l'étape c), lorsque l'écart entre le régime moteur et le régime moteur final est inférieur à une constante prédéterminée, la consigne d'accélération angulaire est calculée comme un barycentre entre ladite constante et ladite accélération angulaire finale, pondéré par ladite constante prédéterminée ;
- à l'étape a), il est prévu d'acquérir la vitesse angulaire des roues du véhicule automobile puis de calculer le régime moteur initial et le régime moteur final en multipliant ladite vitesse angulaire par un coefficient de démultiplication respectivement associé au rapport initial et au rapport final ;
- à l'étape b), l'accélération angulaire finale est calculée en multipliant la dérivée de ladite vitesse angulaire par le coefficient de démultiplication associé au rapport final ; et
- à l'étape e), la consigne de couple transmissible est corrigée par un régulateur proportionnel intégral.

L'invention concerne également un groupe motopropulseur comportant un bloc-moteur, une boîte de vitesses automatique munie d'au moins un moyen d'embrayage, et un calculateur adapté à piloter le couple moteur délivré par le bloc-moteur et le couple transmissible passant par ledit moyen d'embrayage suivant un procédé de pilotage tel que précité.

DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :

- la figure 1 est une vue schématique d'un véhicule automobile comportant un groupe motopropulseur équipé d'une boîte de vitesses à coupleurs coniques ;
- la figure 2 est un graphique illustrant l'évolution du régime moteur N lors d'un passage montant de rapport de vitesses ; et
- la figure 3 est un graphique illustrant l'évolution de la consigne de couple moteur $C_m$, de la consigne de couple transmissible $C_t$, et du couple moteur réalisé $C_{cm}$ lors d'un passage montant d'un rapport de vitesses.

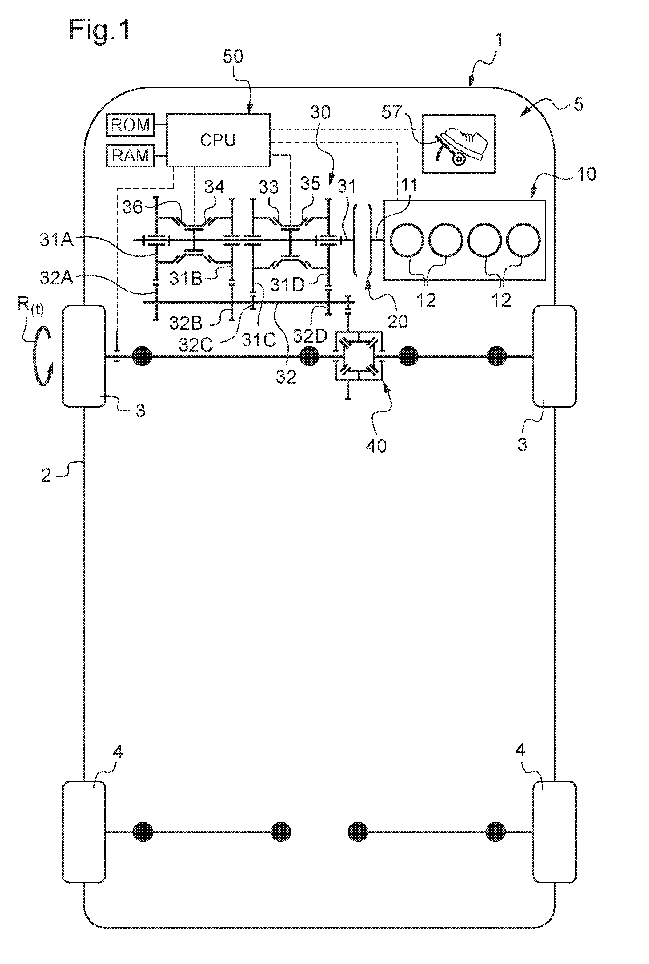

Sur la figure 1, on a représenté schématiquement un véhicule automobile 1 comprenant quatre roues 3, 4 et un châssis 2 sur lequel est fixé un groupe motopropulseur 5.

Tel que représenté sur cette figure, le véhicule automobile 1 comprend deux roues motrices 3. Ces roues motrices 3 tournent à une vitesse angulaire notée R(t).

Pour entraîner ces roues motrices 3 en rotation, le groupe motopropulseur 5 comporte un bloc-moteur 10, un embrayage 20, une boîte de vitesses automatique 30 et un différentiel 40. Il comporte par ailleurs une unité de pilotage 50 de ces différents organes.

Le bloc-moteur 10 comporte ici classiquement quatre pistons 12 montés à translation dans des cylindres pour présenter un mouvement alternatif rectiligne permettant d'entraîner en rotation un vilebrequin 11.

Ce vilebrequin, également appelé « arbre moteur », tourne à une vitesse angulaire appelée « régime moteur » et notée N(t).

L'embrayage 20 est un dispositif d'accouplement temporaire entre l'arbre moteur 11 et l'entrée de la boîte de vitesses automatique 30. Il comporte au moins deux disques adaptés à venir au contact l'un de l'autre pour transmettre progressivement le couple provenant de l'arbre moteur 11.

Telle que représentée sur la figure 1, la boîte de vitesses automatique 30 est une boîte à coupleurs coniques.

Elle comporte deux arbres montés en parallèle, dont un arbre primaire 31 solidarisé en rotation avec la sortie de l'embrayage 20 et un arbre secondaire 32 solidarisé en rotation avec l'entrée du différentiel 40.

Ces arbres primaire 31 et secondaire 32 portent des pignons qui s'engrènent deux à deux pour transmettre le couple développé par le bloc-moteur 10 vers les roues motrices 3.

Sur la figure 1, on a uniquement représenté les pignons 31C, 32C correspondant au second rapport de la boîte de vitesses automatique 30, les pignons 31 B, 32B correspondant au troisième rapport de la boîte, les pignons 31 D, 32D correspondant au quatrième rapport de la boîte, et les pignons 31A, 32A correspondant au cinquième rapport de la boîte.

Tels qu'illustrés sur cette figure, les pignons de l'arbre primaire 31 sont montés fous sur celui-ci, tandis que les pignons de l'arbre secondaire 32 sont montés fixes en rotation sur celui-là.

Pour sélectionner l'un de ces quatre rapports, la boîte de vitesses automatique 30 comporte quatre coupleurs coniques 33 - 36 chacun adapté à venir au contact d'une partie conique complémentaire de l'un des pignons fous de l'arbre primaire 31 pour transmettre progressivement le couple provenant de l'arbre primaire 31 vers ce pignon fou et donc vers l'arbre secondaire 32.

Ces coupleurs coniques sont solidarisés par paire. Chaque paire de coupleurs coniques est montée libre en translation sur l'arbre primaire, l'une entre les deux rapports pairs de la boîte et l'autre entre les deux rapports impairs de la boîte. Ces paires de coupleurs coniques sont alors pilotées conjointement pour, lors d'un changement de rapport, que l'une de ces paires de coupleurs coniques vienne progressivement au contact de la partie conique complémentaire de l'un des pignons fous de l'arbre primaire 31 tandis que l'autre de ces paires de coupleurs coniques se désolidarise progressivement du pignon fou correspondant.

Cette architecture de boîte de vitesses permet ainsi de changer de rapport sans rupture de couple, c'est-à-dire de telle sorte que les roues motrices 3 ne se trouvent à aucun moment en roues libres.

L'embrayage 20 et chacun des coupleurs coniques 33 - 36 de la boîte de vitesses 30 peuvent être placés dans trois états de fonctionnement différents, dont un état verrouillé, un état ouvert, et un état de glissement.

Lorsque l'embrayage 20 ou l'un des coupleurs coniques 33 - 36 est verrouillé, il transmet intégralement le couple de son entrée vers sa sortie.

Lorsque l'embrayage 20 ou l'un des coupleurs coniques 33 - 36 est ouvert, aucun couple n'est transmis depuis son entrée vers sa sortie.

Lorsque l'embrayage 20 ou l'un des coupleurs coniques 33 - 36 est dans son état de glissement, les disques de l'embrayage 20 ou les parties complémentaires du coupleur conique 33 - 36 et du pignon fou correspondant glissent l'un contre l'autre. Dans cet état, il est possible de moduler précisément le couple transmis depuis son entrée vers sa sortie, en pilotant l'effort de mise en pression des deux disques de l'embrayage 20 ou du coupleur conique contre le pignon fou correspondant.

Le différentiel 40 présente quant à lui une entrée, solidarisée en rotation à l'arbre secondaire 32 de la boîte de vitesses 30, et deux sorties solidarisées en rotation aux deux roues motrices 3 du véhicule automobile.

Le calculateur 50 comporte quant à lui un processeur (CPU), une mémoire vive (RAM), une mémoire morte (ROM), et différentes interfaces d'entrée et de sortie.

Grâce à ses interfaces d'entrée, le calculateur 50 est adapté à recevoir de différents capteurs des signaux d'entrée relatifs au fonctionnement du moteur.

Dans sa mémoire vive, le calculateur 50 peut ainsi en particulier mémoriser le régime moteur N(t) instantané du bloc-moteur 10 et la vitesse angulaire R(t) des roues motrices 3. Il peut également mémoriser en continu le couple souhaité par le conducteur, c'est-à-dire le couple $C_0$ que le conducteur souhaite voir transmis aux roues motrices 3 du véhicule. Ce couple souhaité $C_0$ est ici issu d'une cartographie, et est déterminé en fonction de la pression exercée sur la pédale d'accélération 51 ou de la position de celle-ci.

Dans sa mémoire morte, le calculateur 50 mémorise des données invariables, telles que notamment les coefficients de démultiplication k des différents rapports de la boîte de vitesses automatique 30. Il mémorise également dans cette mémoire morte des cartographies prédéterminées sur banc d'essais, par exemple celle liant le couple souhaité

$C_0$ à la pression exercée sur la pédale d'accélération 51.

Le calculateur 50 est enfin adapté à générer, pour chaque condition de fonctionnement du moteur, des signaux de sortie. Alors, grâce à ses interfaces de sortie, le calculateur 50 est adapté à piloter en fonction de ces signaux de sortie les différents organes du moteur, notamment le bloc-moteur 10 et les coupleurs coniques 33 - 36.

Ici, le bloc-moteur 10 et les coupleurs coniques 33 - 36 sont respectivement pilotés suivant des consignes de couple moteur $C_m$ et de couple transmissible $C_t$.

La présente invention porte alors plus précisément sur le procédé d'élaboration de ces consignes de couple $C_m$, $C_t$ lors d'un changement de rapport de boîte de vitesses.

Dans la suite de cet exposé, on s'intéressera plus précisément à un passage montant de rapport de boîte, depuis un rapport initial dans lequel un coupleur conique initial $30_{ini}$ est verrouillé sur un pignon fou initial $31_{ini}$, vers un rapport final dans lequel un coupleur conique final $30_{fin}$ est verrouillé sur un pignon fou final $31_{fin}$. Le coefficient de démultiplication du rapport initial sera alors noté $k_{ini}$ et celui du rapport final sera noté $k_{fin}$.

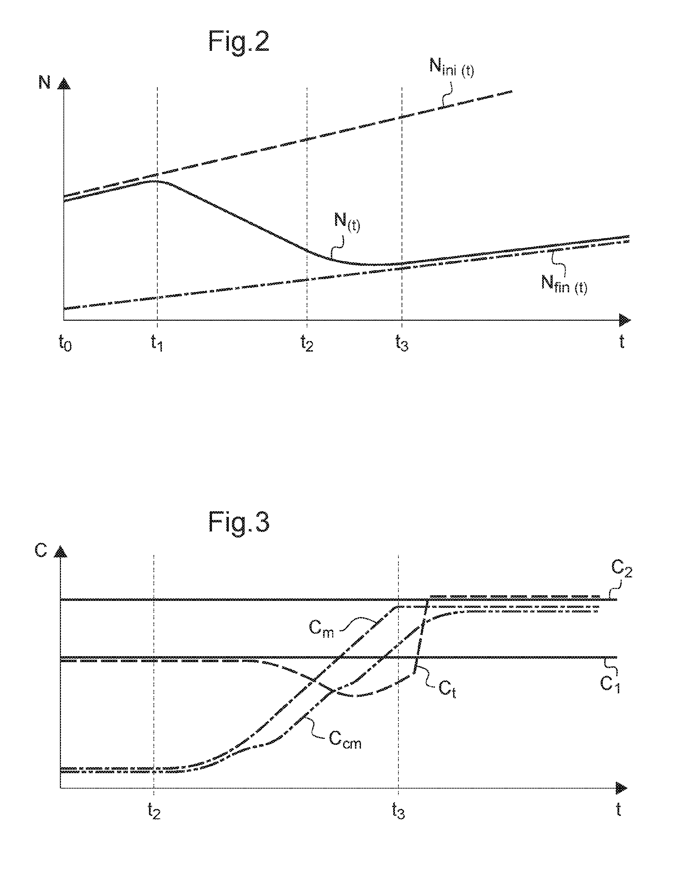

Sur la figure 2, on a représenté l'évolution du régime moteur $N(t)$ lors de ce passage montant de rapport de boîte de vitesses.

Initialement, à l'instant $t_0$ où est déclenché le changement de rapport, le régime moteur $N(t)$ croît. Dans cet exposé, et tel que représenté sur la figure 2, ce régime moteur $N(t)$ croît linéairement selon une droite notée $\mathbf{N}_{ini}(t)$.

Compte tenu des valeurs des coefficients de démultiplication initial $k_{ini}$ et final $k_{fin}$, on sait qu'à l'instant temps $t_3$ où s'achèvera le changement de rapport, le régime moteur $N(t)$ devra alors croître linéairement selon une droite notée $N_{fin}(t)$.

Il s'agit alors, au cours d'une phase de synchronisation du régime moteur $N(t)$ depuis le rapport initial vers le rapport final, de piloter le bloc-moteur 10 selon une consigne de couple moteur $C_m$ telle qu'entre les instants $t_0$ et $t_3$, le régime moteur $N(t)$ décroît continûment, et de manière continûment dérivable, depuis la droite $N_{ini}(t)$ vers la droite $N_{fin}(t)$.

Sur la figure 2, on distingue un instant $t_1$ (ici distinct de l'instant $t_0$) où débute la phase de synchronisation du régime moteur $N(t)$, et un instant $t_2$ situé entre les instants $t_1$ et $t_3$. Cet instant $t_2$ correspond à celui avant lequel le régime moteur $N(t)$ est contrôlé pour décroître rapidement, et ici linéairement, et après lequel le régime moteur $N(t)$ est contrôlé pour décroître de moins en moins vite pour rejoindre le plus progressivement possible la droite $N_{fin}(t)$. On parle entre les instants $t_2$ et $t_3$ de phase d'accostage du régime moteur $N(t)$.

Sur la figure 3, on a représenté l'évolution des consignes de couple $C_m$, $C_t$ durant la phase de synchronisation du régime moteur $N(t)$.

La consigne de couple moteur $C_m$, qui est initialement égale à une valeur réduite pour permettre au régime moteur $N(t)$ de décroître linéairement, croît ensuite progressivement lors de la phase d'accostage du régime moteur jusqu'à une valeur $C_2$ permettant au couple transmis aux roues motrices 3 d'être égal au couple souhaité par le conducteur.

La consigne de couple transmissible $C_t$ est quant à elle supérieure à la consigne de couple moteur $C_m$ au début et à la fin de la phase d'accostage du régime moteur $N(t)$, ce qui permet de verrouiller le coupleur conique final $30_{fin}$ lors de ces moments. Cette consigne de couple transmissible $C_t$ est en revanche inférieure à la consigne de couple moteur $C_m$ au milieu de la phase d'accostage, de manière à filtrer le couple transmis aux roues motrices 3 afin d'éviter tout à-coups.

Le procédé d'élaboration des consignes de couple $C_m$, $C_t$ est plus précisément élaboré de la manière suivante.

A l'instant $t_0$ de début du changement de rapport, le calculateur 50 place les coupleurs coniques initial $30_{ini}$ et final $30_{fin}$ dans leur état de glissement. Il commande ensuite le transfert du couple depuis le coupleur conique initial $30_{ini}$ vers le coupleur conique final $30_{fin}$ (étape non représentée sur les figures).

Pour cela, le calculateur 50 impose au coupleur conique final $30_{fin}$ une consigne de couple transmissible $C_t$ croissante. En contrepartie, une consigne de couple transmissible $C_t$ décroissante est imposée au coupleur conique initial $30_{ini}$.

A l'issue de cette première phase de transfert de couple, la consigne de couple transmissible $C_t$ imposée au coupleur conique final $30_{fin}$ est calculée pour être égale à une consigne de couple primaire $C_1(t)$ qui, telle qu'elle est représentée sur la figure 3, est ici constante pour la clarté de l'exposé. Cette consigne de couple primaire $C_1(t)$ correspond au couple souhaité $C_0$ par le conducteur, retranché du couple d'inertie moteur.

A l'instant $t_1$, qui suit cette phase de transfert de couple, débute la phase de synchronisation du régime moteur $N(t)$.

La consigne de couple moteur $C_m$ est alors pilotée pour permettre au régime moteur $N(t)$ de décroître.

Cette consigne de couple moteur $C_m$ est ici déterminée en calculant au préalable une consigne d'accélération angulaire $\Omega$ de l'arbre moteur 11 prenant en compte le temps de passage du rapport, qui est inhérent aux temps de réponse des différents organes du groupe motopropulseur 5.

Cette consigne d'accélération angulaire $\Omega$ présente deux parties, une partie constante entre les instants $t_1$ et $t_2$ pour permettre une décroissance rapide du régime moteur $N(t)$, et une partie variable pour permettre un accostage sans à-coups du régime moteur $N(t)$.

Cette consigne d'accélération angulaire Ω est calculée de telle sorte que, lorsque le régime moteur N(t) atteint le régime moteur final $N_{fin}(t)$, elle atteigne une accélération angulaire prédéterminée, notée $\Omega_{fin}(t)$, pour assurer l'égalisation du couple moteur et du couple souhaité par le conducteur en fin de synchronisation du régime moteur.

Pour cela, au cours d'une première étape, le calculateur 50 détermine le régime moteur initial $N_{ini}(t)$ attendu sur le rapport initial, ainsi que le régime moteur final $N_{fin}(t)$ attendu sur le rapport final. Ces calculs sont réalisés en fonction de la vitesse angulaire R(t) des roues motrices 3 et des coefficients de démultiplication $k_{ini}$, $k_{fin}$.

Le régime moteur initial $N_{ini}(t)$ est calculé selon la formule suivante :

$$N_{ini}(t) = k_{ini}.R(t).$$

Le régime moteur final $N_{fin}$ (t) est calculé selon la formule suivante :

$$N_{fin}(t) = k_{fin}.R(t).$$

Au cours d'une seconde étape, le calculateur 50 calcule la dérivée du régime moteur final $N_{fin}$ (t). Cette dérivée, appelée accélération angulaire finale $\Omega_{fin}(t)$, correspond à la pente que la courbe du régime moteur N(t) doit présenter à l'instant $t_3$ pour éviter tout à-coup.

Cette accélération angulaire finale $\Omega_{fin}(t)$ est calculée selon la formule suivante :

$$\Omega_{fin}(t) = k_{fin}.\frac{dR(t)}{dt} \ .$$

Au cours d'une troisième étape, le calculateur 50 détermine la consigne d'accélération angulaire Ω(t) de l'arbre moteur 11 qui permettra de contrôler le régime moteur N(t) lors de l'ensemble de la phase de synchronisation, entre les instants $t_1$ et $t_3$.

L'instant $t_2$ est alors choisi comme le moment où la différence entre le régime moteur N(t) et le régime moteur final $N_{fin}(t)$ sera égale à une constante $\Delta N$ prédéterminée, mémorisée dans la mémoire morte du calculateur 50. Cette constante $\Delta N$ pourra éventuellement présenter une valeur différente selon le rapport initial et le rapport final sélectionnés.

Compte tenu de la durée de synchronisation moyenne $\Delta T$ du régime moteur, la consigne d'accélération angulaire Ω(t) est calculée entre les instants $t_1$ et $t_2$ selon la formule suivante :

$$\Omega(t) = \frac{N_{fin}(t_1) - N_{ini}(t_1)}{\Delta T} = A \ .$$

Elle est en revanche calculée entre les instants $t_2$ et $t_3$ selon la formule suivante :

$$\Omega(t) = A.\frac{N(t) - N_{fin}(t)}{\Delta N} + \Omega_{fin}(t).(1 - \frac{N(t) - N_{fin}(t)}{\Delta N})$$

Au cours d'une quatrième étape, connaissant le profil que doit présenter l'accélération angulaire Ω(t) de l'arbre moteur 11, le calculateur 50 calcule la consigne de coulpe moteur $C_m$ qui devrait idéalement permettre d'assurer un accostage parfait du régime moteur N(t).

Cette consigne de coulpe moteur $C_m$ est calculée selon la formule suivante :

$$C_m(t) = C_1(t) + J.\,\Omega(t).$$

Puis, au cours d'une cinquième étape, le calculateur 50 calcule la consigne de couple transmissible $C_t$ qui permettra au coupleur conique final $30_{fin}$ de filtrer le couple moteur $C_m$ afin que le couple effectivement transmis aux roues motrices 3 du véhicule soit continu.

Cette consigne de couple transmissible $C_t$ est calculée selon la formule suivante :

$$C_t(t) = C_1(t) + C_{cm}(t) - C_m(t),$$

avec $C_{cm}(t)$ le couple moteur réalisé.

La courbe illustrant sur la figure 3 le couple moteur réalisé $C_{cm}$ aura à cet effet été préalablement lue dans le calculateur 50 et estimée à partir du débit d'air frais aspiré par le bloc-moteur, du rendement d'avance, du régime moteur, du couple de friction du bloc-moteur et du couple indiqué du bloc-moteur.

Cette correction du couple transmissible $C_t$ permet ainsi de tenir compte de l'écart entre la courbe idéale $C_m$ et la courbe effective $C_{cm}$ que suit le couple moteur.

Un régulateur proportionnel intégral (PI) est ici prévu pour réguler les erreurs de consigne de couple transmissible $C_t$. Ce régulateur PI est choisi pour varier entre les instants $t_1$ et $t_2$, puis pour se figer entre les instants $t_2$ et $t_3$.

Le gain de ce régulateur PI sera fonction du type (ascendant ou descendant) du changement de rapport ainsi que du rapport final sélectionné.

La présente invention n'est nullement limitée aux modes de réalisation décrits et représentés, mais l'homme du métier saura y apporter toute variante conforme à son esprit.

En particulier, elle s'applique également aux groupes motopropulseurs équipés de boîtes de vitesses automatiques d'architectures différentes, notamment à ceux équipés de boîtes de vitesses à double embrayages.

Par ailleurs, si, telle qu'elle est décrite dans le présent exposé, la phase de synchronisation du régime moteur intervient après la phase de transfert de couple, on pourrait bien sûr prévoir qu'elle intervienne avant cette phase de transfert de couple.

## Revendications

1. Procédé de pilotage d'un groupe motopropulseur d'un véhicule automobile (1) qui comporte un bloc-moteur (10) et une boîte de vitesses automatique (30) munie d'au moins un moyen d'embrayage (33 - 36), dans lequel, lors d'un changement de rapport de vitesses de la boîte de vitesses automatique (30) depuis un rapport initial vers un rapport final, il est prévu des étapes de synchronisation du régime moteur (N) dudit bloc-moteur (10) consistant à :

   a) déterminer un régime moteur initial ($N_{ini}$) lorsque le rapport initial est engagé en début de synchronisation et un régime moteur final ($N_{fin}$) lorsque le rapport final sera engagé en fin de synchronisation,
   b) déterminer une accélération angulaire finale ($\Omega_{fin}$) dudit bloc-moteur (10) lorsque le rapport final sera engagé en fin de synchronisation,
   c) calculer, en fonction de ladite accélération angulaire finale ($\Omega_{fin}$), une consigne d'accélération angulaire ($\Omega$) dudit bloc-moteur (10) pour que le régime moteur (N) passe continûment du régime initial ($N_{ini}$) au régime final ($N_{fin}$),
   d) piloter le bloc-moteur (10) selon une consigne de couple moteur ($C_m$) déduite de ladite consigne d'accélération angulaire ($\Omega$), et
   e) piloter ledit moyen d'embrayage (33 - 36) selon une consigne de couple transmissible ($C_t$),
   **caractérisé en ce que**, à l'étape c), ladite consigne d'accélération angulaire ($\Omega$) est calculée de sorte qu'elle atteigne ladite accélération angulaire finale ($\Omega_{fin}$) lorsque le régime moteur (N) atteint le régime final ($N_{fin}$), et
   **en ce que**,
   à l'étape e), il est prévu de mesurer une valeur de couple moteur réalisé ($C_{cm}$) et de calculer ladite consigne de couple transmissible ($C_t$) en fonction de l'écart ($\Delta C$) entre la consigne de couple moteur ($C_m$) et la valeur de couple moteur réalisé ($C_{cm}$).

2. Procédé selon la revendication précédente, dans lequel, à l'étape d), la consigne de couple moteur ($C_m$) est calculée en fonction d'une consigne de couple primaire ($C_1$) qui est égale à un couple souhaité ($C_0$) issu d'une cartographie en fonction d'une position ou d'une pression d'appui sur une pédale d'accélération (51) du véhicule automobile (1), auquel est soustrait un couple d'inertie du bloc-moteur (10).

**3.** Procédé selon la revendication précédente, dans lequel la consigne de couple moteur ($C_m$) est calculée pour être égale à la somme de la consigne de couple primaire ($C_1$) et du produit de l'inertie (J) par la consigne d'accélération angulaire ($\Omega$) du bloc-moteur (10).

**4.** Procédé selon l'une des deux revendications précédentes, dans lequel, à l'étape e), la consigne de couple transmissible ($C_t$) est calculée pour être égale à la somme de la consigne de couple primaire ($C_1$) et dudit écart ($\Delta C$).

**5.** Procédé selon l'une des revendications précédentes, dans lequel, à l'étape c), la consigne d'accélération angulaire ($\Omega$) est calculée pour être égale à une constante (A) tant que l'écart entre le régime moteur (N) et le régime moteur final ($N_{fin}$) est supérieur à une constante prédéterminée ($\Delta N$).

**6.** Procédé selon la revendication précédente, dans lequel, à l'étape c), lorsque l'écart entre le régime moteur (N) et le régime moteur final ($N_{fin}$) est inférieur à une constante prédéterminée ($\Delta N$), la consigne d'accélération angulaire ($\Omega$) est calculée comme un barycentre entre ladite constante (A) et ladite accélération angulaire finale ($\Omega_{fin}$), pondéré par ladite constante prédéterminée ($\Delta N$).

**7.** Procédé selon l'une des revendications précédentes, dans lequel, à l'étape a), il est prévu d'acquérir la vitesse angulaire (R) des roues (3) du véhicule automobile (1), puis de calculer le régime moteur initial ($N_{ini}$) et le régime moteur final ($N_{fin}$) en multipliant ladite vitesse angulaire (R) par un coefficient de démultiplication ($k_{ini}$, $k_{fin}$) respectivement associé au rapport initial et au rapport final.

**8.** Procédé selon la revendication précédente, dans lequel, à l'étape b), l'accélération angulaire finale ($\Omega_{fin}$) est calculée en multipliant la dérivée de ladite vitesse angulaire (R) par le coefficient de démultiplication ($k_{fin}$) associé au rapport final.

**9.** Procédé selon l'une des revendications précédentes, dans lequel, à l'étape e), la consigne de couple transmissible ($C_t$) est corrigée par un régulateur proportionnel intégral (PI).

**10.** Groupe motopropulseur comportant un bloc-moteur (10) et une boîte de vitesses automatique (30) munie d'au moins un moyen d'embrayage (33 - 36), **caractérisé en ce qu'**il comporte un calculateur (50) adapté à piloter le couple moteur ($C_m$) délivré par le bloc-moteur (10) et le couple transmissible ($C_t$) passant par ledit moyen d'embrayage (33 - 36) suivant un procédé selon l'une des revendications précédentes.

Fig.1

# Fig.2

$N_{ini\,(t)}$

$N_{(t)}$

$N_{fin\,(t)}$

$t_0$      $t_1$      $t_2$      $t_3$      $t$

# Fig.3

$C_2$

$C_m$

$C_t$

$C_1$

$C_{cm}$

$t_2$      $t_3$      $t$

**Europäisches Patentamt**
**European Patent Office**
**Office européen des brevets**

# RAPPORT DE RECHERCHE EUROPEENNE

Numéro de la demande

EP 11 30 6166

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 859 263 A1 (NISSAN MOTOR [JP]; JATCO LTD [JP]) 4 mars 2005 (2005-03-04) * le document en entier * ----- | 1-10 | INV. B60W30/18 B60W10/06 B60W10/10 |
| A | DE 10 2007 005396 A1 (ZAHNRADFABRIK FRIEDRICHSHAFEN [DE]) 7 août 2008 (2008-08-07) * le document en entier * ----- | 1-10 | B60W10/02 F16H61/684 F16H61/06 F16H63/50 |
| A | EP 1 647 741 A1 (NISSAN MOTOR [JP]) 19 avril 2006 (2006-04-19) * le document en entier * ----- | 1-10 | |
| A | EP 1 460 317 A2 (NISSAN MOTOR [JP]) 22 septembre 2004 (2004-09-22) * le document en entier * ----- | 1-10 | |

DOMAINES TECHNIQUES
RECHERCHES (IPC)

B60W
F16H

Le présent rapport a été établi pour toutes les revendications

| Lieu de la recherche | Date d'achèvement de la recherche | Examinateur |
|---|---|---|
| Munich | 30 janvier 2012 | Vogt-Schilb, Gérard |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 30 6166

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-01-2012

| Document brevet cité au rapport de recherche | | Date de publication | Membre(s) de la famille de brevet(s) | | Date de publication |
|---|---|---|---|---|---|
| FR 2859263 | A1 | 04-03-2005 | FR | 2859263 A1 | 04-03-2005 |
| | | | JP | 3872783 B2 | 24-01-2007 |
| | | | JP | 2005076593 A | 24-03-2005 |
| | | | US | 2005049112 A1 | 03-03-2005 |
| DE 102007005396 | A1 | 07-08-2008 | AUCUN | | |
| EP 1647741 | A1 | 19-04-2006 | CN | 1760519 A | 19-04-2006 |
| | | | DE | 602005003896 T2 | 17-04-2008 |
| | | | EP | 1647741 A1 | 19-04-2006 |
| | | | JP | 4461997 B2 | 12-05-2010 |
| | | | JP | 2006112255 A | 27-04-2006 |
| | | | KR | 20060052173 A | 19-05-2006 |
| | | | US | 2006234830 A1 | 19-10-2006 |
| EP 1460317 | A2 | 22-09-2004 | CN | 1532438 A | 29-09-2004 |
| | | | EP | 1460317 A2 | 22-09-2004 |
| | | | JP | 3896976 B2 | 22-03-2007 |
| | | | JP | 2004278769 A | 07-10-2004 |
| | | | US | 2004185985 A1 | 23-09-2004 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1050638